Europäisches Patentamt

European Patent Office

Office européen des brevets

(19)

(11) Veröffentlichungsnummer : **0 117 222 B1**

(12) **EUROPÄISCHE PATENTSCHRIFT**

(45) Veröffentlichungstag der Patentschrift :
30.07.86

(51) Int. Cl.⁴ : **B 01 D 27/10**

(21) Anmeldenummer : **84730013.4**

(22) Anmeldetag : **15.02.84**

(54) **Ölfilter.**

(30) Priorität : **22.02.83 DE 3306553**

(43) Veröffentlichungstag der Anmeldung :
**29.08.84 Patentblatt 84/35**

(45) Bekanntmachung des Hinweises auf die Patenterteilung : **30.07.86 Patentblatt 86/31**

(84) Benannte Vertragsstaaten :
**BE FR GB IT**

(56) Entgegenhaltungen :
**DE-A- 3 235 514**
**FR-A- 2 198 534**
**GB-A- 1 070 029**
**GB-A- 1 075 424**
**US-A- 2 544 244**
**US-A- 2 877 902**

(73) Patentinhaber : **MANNESMANN Aktiengesellschaft**
**Mannesmannufer 2**
**D-4000 Düsseldorf 1 (DE)**

(72) Erfinder : **Siegmund, Werner**
**Obersdorfstrasse 17**
**D-6901 Heiligenkreuzsteinach (DE)**

(74) Vertreter : **Meissner, Peter E., Dipl.-Ing. et al**
**Herbertstrasse 22**
**D-1000 Berlin 33 (DE)**

**Beschreibung**

Die Erfindung betrifft einen Ölfilter, insbesondere für Kraftfahrzeugmotoren, gemäß dem Oberbegriff des Patentanspruchs 1.

Ölfilter müssen von Zeit zu Zeit ausgetauscht werden, wenn der Filtereinsatz durch starke Verschmutzung des Öls bzw. abgeschiedene Ölrückstände unbrauchbar geworden ist.

Die bisherigen Ölfilter z. B. US-A-2 877 902 besitzen zwischen dem Gehäusedeckel und dem Filtereinsatz eine Membran. Ein Nachteil dieser Konstruktion ist, daß bei einem Austausch des Ölfilters, also nach Abschrauben des gesamten Ölfiltergehäuses von dem zentralen Stutzen der Ölfilterhalterung, das im Filter verbliebene Öl auslaufen kann, weil die Elastizität der Membran insbesondere nach längerem Gebrauch und abgesetzten Verschmutzungen an der Membran bzw. im Bereich der Öleinlaßöffnungen nicht ausreicht, eine notwendige Anpreßkraft zum Verschließen der Öleinlaßöffnungen aufzubringen.

Aufgabe der Erfindung ist es, einen Ölfilter der eingangs genannten Art so auszubilden, daß bei einem Abschrauben des Ölfilters von der Ölfilterhalterung ein Auslaufen im Filter zurückgebliebener Ölreste zuverlässig vermieden wird und darüberhinaus Druckschwankungen durch eine Bewegung der Druckplatte vermieden werden.

Gelöst wird diese Aufgabe erfindungsgemäß durch die im Anspruch 1 angegebenen Merkmale. Vorzugsweise Ausgestaltungen ergeben sich aus den Unteransprüchen.

Die Erfindung soll nachfolgend anhand von Ausführungsbeispielen erläutert werden.

Auf eine nur teilweise in der Zeichnung dargestellte Ölfilterhalterung 1 mit einem zentralen, eine Ölauslaßöffnung 12 aufweisenden Stutzen 17 ist der Ölfilter mit dem Gehäuse 2 aufschraubbar. Zwischen dem Gehäusedeckel 20 und der Ölfilterhalterung 1 bzw. einer den zentralen Stutzen 17 ringförmig mit Abstand umgebenden Auflagefläche 18 ist eine Ringdichtung 9 angeordnet, die eine Abdichtung im Bereich der Öleinlaßöffnungen 11 gewährleistet. Innerhalb des Gehäuses 2 ist bei dem dargestellten Ausführungsbeispiel ein inneres Gehäuse 3 angeordnet, das den eigentlichen Filtereinsatz 8 aufnimmt. Dieser besitzt einen gehäusedeckelseitigen Boden 4 sowie einen gehäusebodenseitigen Boden 5 und weist zentral einen Sammelkanal 7 für das gereinigte Öl auf.

Weitere Einzelheiten, wie Ventile innerhalb dieses Sammelkanals sind hier nicht dargestellt worden.

Zwischen dem Gehäusedeckel 20 und dem gehäusedeckelseitigen Boden 4 ist eine Druckplatte 13 mit einer darauf befindlichen Membran oder Dichtungsplatte 14 angeordnet. Diese Druckplatte mit der Membran oder Dichtung gehört zum Stand der Technik und wird bei dargestellten Ausführungsbeispielen eines Ölfilters verwendet aber auch bei herkömmichen Filtern, die anders aufgebaut sind, insbesondere nicht ein inneres Gehäuse 3 besitzen. Die Druckplatte 13 ist erfindungsgemäß mit Distanzhaltern 15 versehen, die sich durch entsprechende Öffnungen in dem Gehäusedeckel hindurcherstrecken. Die axiale Länge dieser Distanzhalter 15 ist so bemessen, daß sie im aufgeschraubten Zustand des Gehäuses 2 auf den zentralen Stutzen der Ölfilterhalterung 1 auf der Auflage fläche dieses zentralen Stutzens 17 aufliegen, wobei gleichzeitig die Druckplatte 13 — wie in der Zeichnung dargestellt — von der Ringwulst 10 und damit den Öleinlaßöffnungen 11 abgehoben ist. Gegenüber den herkömmlichen zwischen gehäusedeckelseitigen Boden 4 und Druckplatte 13 angeordneten Federn ist die Druckfeder 16 im vorliegenden Fall stärker ausgebildet. Hierdurch wird erreicht, daß beim Abschrauben des Gehäuses vom zentralen Stutzen die Ölfilterhalterung 1 die Druckplatte zuverlässig gegen die Ringwulst 10 gedrückt wird und damit die Öleinlaßöffnungen verschließt, so daß ein Auslaufen des Filters verhindert wird. Die vergleichsweise stärkere Ausbildung der Druckfeder ist möglich, weil die Distanzhalter 15 das Abheben der Druckplatte von der Ringwulst 10 und damit den Öleinlaßöffnungen 11 beim Aufschrauben bewirken, also dieses Abheben nicht durch den Öldruck herbeigerufen werden muß.

Die Distanzhalter können als Stifte, vorzugsweise inform von drei um die mittlere Öffnung der Druckplatte gleichmäßig verteilt angeordnete Stifte ausgebildet sein oder es besteht auch die Möglichkeit entsprechende Ringsegmente an die Druckplatte anzuordnen, wobei die Wirkung in jedem Fall die gleiche ist.

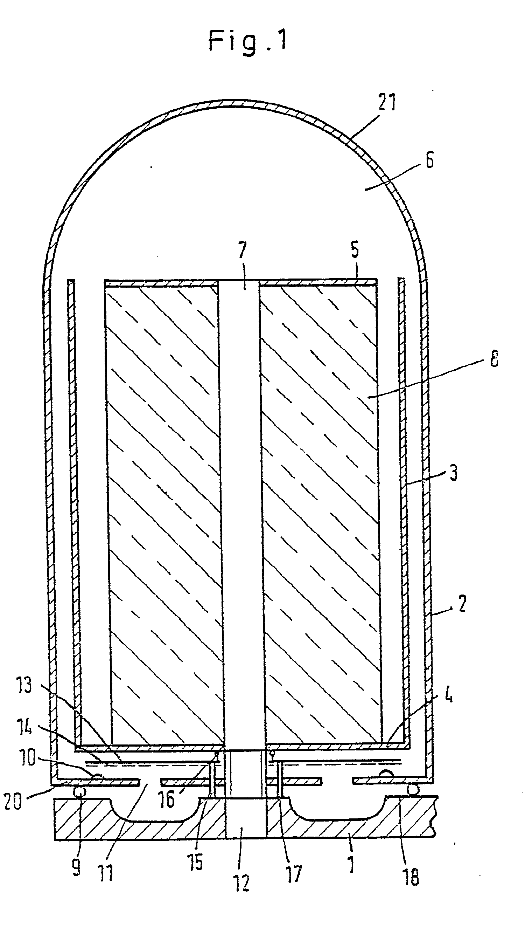

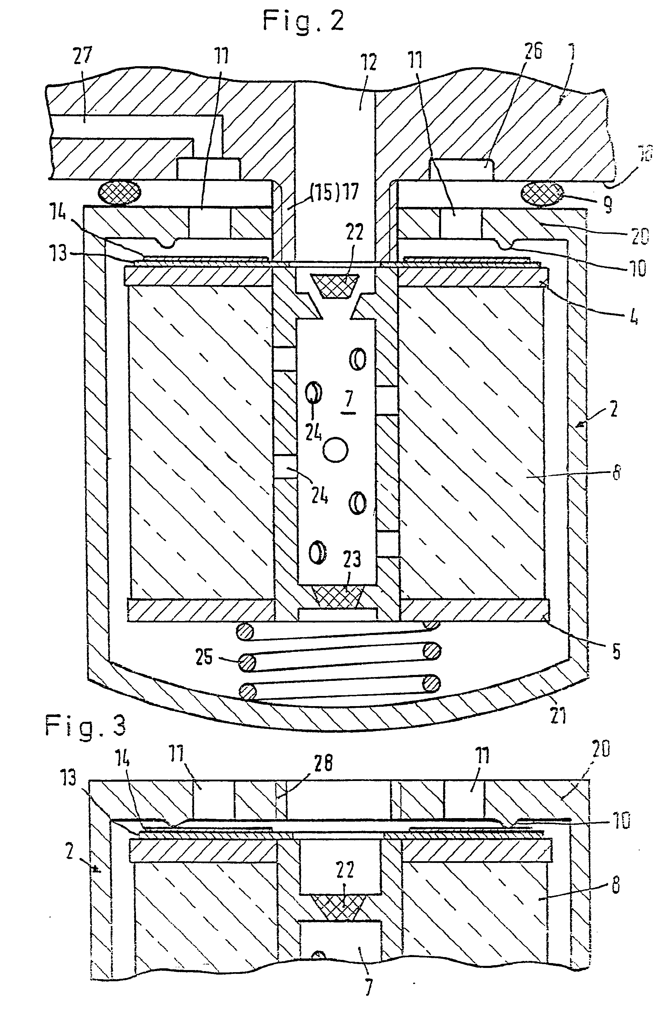

Figur 2 zeigt einen hängend eingebauten Filter, bei dem der zentrale Stutzen 17 selbst die Funktion des Distanzhalters 15 übernommen hat. Die Druckplatte 13 ist dabei zwischen der Stirnfläche des zentralen Stutzens 17 und dem Filtereinsatz 2 eingespannt. Es ist lediglich vorzusehen, daß der lichte Durchmesser des zentralen Durchganges der ringscheibenförmigen Druckplatte 13 etwa dem lichten Durchmesser der Ölauslaßöffnung 12 entspricht.

Weiterhin zeigt Figur 2 eine Druckfeder 25, die über den Filtereinsatz 8 die Druckplatte 13 an den zentralen Stutzen 17 drückt, sich am Gehäuseboden 21 abstützt und so auch für eine geschlossene Verbindung des zentralen Sammelkanales 7 mit dem Ölauskanal 12 sorgt. Im zentralen Sammelkanal 7 sind Öffnungen 24 angedeutet, durch die gereinigtes Öl in diesen eintreten kann. Gehäusebodenseitig ist in chematischer Darstellung ein Bypassventil 23 zu sehen, während ölauslaßseitig ein sich beim Betrieb des Filters öffnendes Auslaufventil 22 vorgesehen ist. Diese Ventile 22, 23 sind üblicherweise vorhanden. Weiterhin ist ein Drucköleinlaßkanal 27 und ein Ringkanal 26 gezeigt.

Figur 3 zeigt den Filter nach Figur 2 in einem Ausschnitt und im abgeschraubten Zustand. Eine Linie 28 deutet das Innengewinde der zentralen Öffnung des Gehäusedeckels 20 an, über das der Filter auf den mit Außengewinde versehenen zentralen Stutzen 17 aufschraubbar ist. Unter der Auflast der in Figur 3 nicht mehr zu sehenden entsprechend stark vorgespannten Druckfeder 25 hat sich der Filtereinsatz 8 gegenüber der in Fig. 2 gezeigten Position axial verschoben und preßt nun die Druckplatte 13 und über diese die Dichtungsscheibe 14 gegen die Ringwulst 10. Das im Filter befindliche verschmutzte Öl kann nun nicht mehr auslaufen. Auch der im Sammelkanal 7 befindliche Ölrest läuft nicht aus, da das Ölauslaßventil 22 in bekannter Weise selbsttätig geschlossen ist.

**Patentansprüche**

1. Ölfilter, insbesondere für Kraftfahrzeugmotoren, der aus einem Gehäuse (2) und einem im Gehäuse angeordneten Filtereinsatz (8) besteht, wobei der Filtereinsatz stirnseitig mit Böden (4, 5) versehen ist, der Filtereinsatz zwischen den Böden Abstand zum Gehäusemantel hat und der Filter im wesentlichen radial von außen nach innen durchströmt wird, wobei der zentrale Sammelkanal (7) des Filtereinsatzes (8) die Böden miteinander verbindet, am Gehäusebodenende verschlossen ist und am Gehäusedeckelende druckdicht mit dem Ölauslaßstutzen des Gehäusedeckels (20), der neben dem Ölauslaßstutzen Öleinlaßöffnungen (11) aufweist, verbunden ist, der seinerseits auf einen zentralen Stutzen (17) an der Ölfilterhalterung (1) aufschraubbar ist, die eine den Stutzen ringförmig mit Abstand umgebende Auflagefläche (18) für den Gehäuseboden (20) aufweist, und wobei zwischen gehäusedeckelseitigem Boden (4) des Filtereinsatzes (8) und dem Gehäusedeckel (20) eine die Öleinlaßöffnungen verschließende Dichtmembran (14) vorgesehen ist, dadurch gekennzeichnet, daß die an eine die Öleinlaßöffnungen (11) ringförmig umgebende am Gehäusedeckel (20) ausgebildete Dichtwulst (10) anpreßbare Dichtmembran (14) von einer Druckplatte (13) gestützt ist und daß im auf die Filterhalterung (1) aufgeschraubten Zustand die Druckplatte (13) mit wenigstens einem durch den Gehäusedeckel (20) hindurchgeführten Distanzhalter (15), der sich auf der Filterhalterung (1) abstützt, von den Öleinlaßöffnungen (11) abgehoben ist.

2. Ölfilter nach Anspruch 1, dadurch gekennzeichnet, daß mehrere Distanzhalter (15) an der Druckplatte (13) angeordnet sind, deren axiale Länge derart bemessen ist, daß sie sich im auf die Filterhalterung (1) aufgeschraubten Zustand des Ölfilters (2) auf dem zentralen Stutzen (17) die Druckplatte (13) von den Öleinlaßöffnungen (11) abhebend, abstützen.

3. Ölfilter nach Anspruch 1, dadurch gekennzeichnet, daß der zentrale Stutzen (17) selbst Distanzhalter (15) ist.

4. Ölfilter nach Anspruch 3, dadurch gekennzeichnet, daß die Druckplatte (13) zwischen der Stirnfläche der zentralen Stutzen (17) und dem Filtereinsatz (8) unter der Auflast einer zwischen dem Gehäuseboden (21) und dem Filtereinsatz (8) wirksamen Druckfeder (25) eingespannt ist.

5. Ölfilter nach einem der Ansprüche 1 bis 4, dadurch gekennzeichnet, daß die Dichtmembrane (14) auf die Druckplatte (13) aufgeklebt ist.

**Claims**

1. Oil filter, in particular for vehicle motors, which consists of a housing (2) and a filter unit (8) arranged in the housing, in which the filter unit is provided at its ends with base plates (4, 5), the filter unit between the base plates is at a distance from the housing mantle and the filter is flowed through substantially radially from the exterior to the interior, whereby the central collection channel (7) of the filter unit (8) connects the base plates with each other, is closed at the housing base end and is joined at the housing cover end so as to be pressure-tight with the oil outlet connection piece of the housing cover (20), which alongside the oil outlet connection piece has oil inlet openings (11), which in turn is able to be screwed onto a central connection piece (17) on the oil filter mounting (1), which has a bearing surface (18), surrounding the connection piece at a distance in an annular form, for the housing base (20), and in which between the base plate (4) of the filter unit (8) on the housing cover side and the housing cover (20) a sealing membrane (14) is provided, which shuts the oil inlet openings, characterised in that the sealing membrane (14), which is able to be pressed against a sealing bead (10) surrounding the oil inlet openings (11) in annular shape and formed on the housing cover (20), is supported by a pressure plate (13) and that in screwed-on state on the filter mounting (1), the pressure plate (13) is raised from the oil inlet openings (11) with at least one spacer (15) which is passed through the housing cover (20) and which supports itself on the filter mounting (1).

2. Oil filter according to Claim 1, characterised in that a plurality of spacers (15) are arranged on the pressure plate (13), the axial length of which is dimensioned such that they support themselves, in the screwed-on state of the oil filter (2) on the filter mounting (1), on the central connection piece (17) raising the pressure plate (13) from the oil inlet openings (11).

3. Oil filter according to Claim 1, characterised in that the central connection piece (17) is itself the spacer (15).

4. Oil filter according to Claim 3, characterised in that the pressure plate (13) is fixed between the front face of the central connection piece (17) and the filter unit (8) under the applied load of a pressure spring (25) operative between the housing base (21) and the filter unit (8).

5. Oil filter according to one of Claims 1 to 4, characterised in that the sealing membrane (14) is pasted onto the pressure plate (13).

**Revendications**

1. Filtre à huile, en particulier pour moteurs de véhicules automobiles, qui est constitué d'un carter (2) et d'une garniture de filtre (8) disposée dans le carter, la garniture de filtre étant munie frontalement de fonds (4, 5), la garniture de filtre entre les fonds présentant un espace par rapport à l'enveloppe du carter et le filtre étant traversé de façon généralement radiale de l'extérieur vers l'intérieur, le canal de collecte central (7) de la garniture de filtre (8) reliant ensemble les fonds, étant fermé à l'extrémité de fond du carter et étant relié de façon étanche à la pression à l'extrémité de couvercle du carter avec la tubulure d'évacuation d'huile du couvercle (20) du carter, qui comporte des ouvertures d'admission d'huile (11) près de la tubulure d'évacuation d'huile, le filtre pouvant être vissé de son côté sur une tubulure centrale à la fixation (1) du filtre à huile, qui comporte une surface d'appui (18) pour le fond (20) du carter, entourant avec écartement de façon annulaire la tubulure, et une membrane d'étanchéité (14) fermant les ouvertures d'admission d'huile étant prévue entre le fond (4), du côté du couvercle du carter, de la garniture de filtre (8) et le couvercle (20) du carter, caractérisé en ce que la membrane d'étanchéité (14) pouvant être pressée contre le bourrelet d'étanchéité (10) réalisé sur le couvercle (20) du carter et entourant de façon annulaire les ouvertures (11) d'admission d'huile est supportée par une plaque de pression (13), et en ce que, dans l'état vissé sur la fixation (1) de filtre, la plaque de pression (13) est soulevée des ouvertures (11) d'admission d'huile avec au moins une entretoise (15) traversant le couvercle (20) du carter, entretoise qui s'appuie sur la fixation (1) du filtre.

2. Filtre à huile selon la revendication 1, caractérisé en ce que plusieurs entretoises (15) sont disposées sur la plaque de pression (13), leur longueur axiale étant choisie de façon telle qu'elles s'appuient dans l'état vissé du filtre à huile (2) sur la fixation (1) de filtre sur la tubulure centrale (17), la plaque de pression (13) étant soulevée des ouvertures d'admission d'huile (11).

3. Filtre à huile selon la revendication 1, caractérisé en ce que la tubulure centrale (17) constitue elle-même une entretoise (15).

4. Filtre à huile selon la revendication 3, caractérisé en ce que la plaque de pression (13) est serrée entre la surface frontale de la tubulure centrale (17) et la garniture de filtre (8) sous la charge d'un ressort de pression (25) agissant entre le fond (21) du carter et la garniture de filtre (8).

5. Filtre à huile selon l'une des revendications 1 à 4, caractérisé en ce que la membrane d'étanchéité (14) est collée sur la plaque de pression (13).

# Fig.1

Fig. 2

Fig. 3